# EUROPEAN PATENT APPLICATION

(11) **EP 4 098 131 A1**
(43) Date of publication of application: **07.12.2022**
(21) Application number: 21747037.6
(22) Date of filing: 29.01.2021
(51) Int. Cl.: A23L 13/40, A23J 3/00, A23L 13/00, A23L 35/00

(54) **METHOD FOR PRODUCING MEAT OR MEAT-LIKE PROCESSED FOOD PRODUCT**

(30) Priority: 31.01.2020 JP 2020015593
(71) Applicant: AJINOMOTO CO., INC., Chuo-ku Tokyo 104-8315 (JP)
(72) Inventor: OGAWA, Teppei, Kawasaki-shi, Kanagawa 210-8681 (JP); KANZAKI, Hirokatsu, Kawasaki-shi, Kanagawa 210-8681 (JP); KAWATOU, Fagyun, Kawasaki-shi, Kanagawa 210-8681 (JP)
(74) Representative: Strehl Schübel-Hopf & Partner
(86) International application number: PCT/JP2021/003392
(87) International publication number: WO 2021/153784

(57) **Abstract**

There is provided a meat or meat-like processed food product containing a vegetable oil and fat which has a good yield and improved juiciness. There is also provided a method for producing a meat or meat-like processed food product includes: adding lipase to a vegetable oil and fat to obtain a mixture; and blending the mixture with an ingredient of the meat or meat-like processed food product.

## Description

### TECHNICAL FIELD

This invention relates to a method for producing a meat or meat-like processed food product. The invention further relates to a method for improving a yield of a meat or meat-like processed food product containing a vegetable oil and fat, and a meat or meat-like processed food product.

### BACKGROUND ART

Some meat processed food products contain a liquid oil and fat (vegetable oil and fat), such as products assumed to be consumed at low temperatures. For example, Patent Literature 1 describes a pet food that is produced by adding an additive containing a vegetable oil and fat to a mixture with basic blend containing a meat.

In recent years, the market has been expanding for meat-like processed food products containing an artificial meat (referred also to as a meat substitute, a pseudo meat, or a vegemeat) derived from plants or the like. Such a meat-like processed food product generally contains a vegetable oil and fat as the oil and fat. For example, Patent Literature 2 describes a meat-like processed food product that is obtained by adding a binding agent containing a vegetable oil and fat to an organized plant protein containing a plant protein and starch, and then mixing and heating the mixture to coagulate.

### RELATED ART REFERENCE

### Patent Literature

[Patent Literature 1] JP-A-No. 2014-138564 [Patent Literature 2] JP-A-No. 2011-72264

### SUMMARY OF INVENTION

### PROBLEM TO BE SOLVED BY THE INVENTION

However, a meat or meat-like processed food product that contains a vegetable oil and fat has problems such as a low yield and a dried texture due to outflow of the vegetable oil and fat during heating such as baking.

The present invention has been accomplished in view of the above problem. Therefore, it is an object of the present invention to provide a meat or meat-like processed food product containing a vegetable oil and fat with a high yield and improved juiciness.

### MEANS FOR SOLVING PROBLEM

The inventors of the present invention have intensively studied in order to solve the above problem, and as a result, found that the above problem can be solved by blending a mixture that is obtained by adding lipase to the vegetable oil and fat in production of the meat or meat-like processed food product, and completed the present invention.

The present invention provides the followings.
[1] A method for producing a meat or meat-like processed food product, the method comprising:
   adding lipase to a vegetable oil and fat to obtain a mixture; and
   blending the mixture with an ingredient of the meat or meat-like processed food product.
[2] The method according to [1], wherein the mixture is blended with the ingredient of the meat or meat-like processed food product after an interval of 5 minutes or more subsequent to the adding of lipase to the vegetable oil and fat.
[3] The method according to [1] or [2], wherein 10 parts by weight or more of the mixture obtained by adding lipase to the vegetable oil and fat is blended, when a total content of the ingredient of the meat or meat-like processed food product is defined as 100 parts by weight.
[4] The method according to any one of [1] to [3], wherein the vegetable oil and fat is one or more type(s) selected from the group consisting of rapeseed oil, olive oil, corn oil, soybean oil, sesame oil, rice oil, grapeseed oil, palm oil and coconut oil.
[5] The method according to any one of [1] to [4], wherein a content of a monovalent unsaturated fatty acid is 30% by weight or more when a total content of a fatty acid constituting the vegetable oil and fat is defined as 100% by weight.
[6] The method according to any one of [1] to [5], wherein the meat or meat-like processed food product is a hamburger or hamburger-like processed food product, a meatball or meatball-like processed food product, a patty or patty-like processed food product, a ham or ham-like processed food product, a sausage or sausage-like processed food product, a dumpling or dumpling-like processed food product, or a shumai dumpling or shumai dumpling-like processed food product.
[7] A method for improving a yield of a meat or meat-like processed food product containing a vegetable oil and fat, the method comprising:
   adding lipase to the vegetable oil and fat to obtain a mixture; and
   blending the mixture with an ingredient of the meat or meat-like processed food product.
[8] The method according to [7], wherein the mixture is blended with the ingredient of the meat or meat-like processed food product after an interval of 5 minutes or more subsequent to the adding of lipase to the vegetable oil and fat.
[9] The method according to [7] or [8], wherein the vegetable oil and fat is one or more type(s) selected from the group consisting of rapeseed oil, olive oil, corn oil, soybean oil, sesame oil, rice oil, grapeseed oil, palm oil and coconut oil.
[10] The method according to any one of [7] to [9], wherein a content of a monovalent unsaturated fatty acid is 30% by weight or more when a total content of a fatty acid constituting the vegetable oil and fat is defined as 100% by weight.
[11] The method according to any one of [7] to [10], wherein the meat or meat-like processed food product is a hamburger or hamburger-like processed food product, a meatball or meatball-like processed food product, a patty or patty-like processed food product, a ham or ham-like processed food product, a sausage or sausage-like processed food product, a dumpling or dumpling-like processed food product, or a shumai dumpling or shumai dumpling-like processed food product.
[12] A meat or meat-like processed food product containing a mixture obtained by adding lipase to a vegetable oil and fat.

### EFFECT OF THE INVENTION

The present invention can provide a meat or meat-like processed food product containing a vegetable oil and fat with a good yield and improved juiciness.

### EMBODIMENT FOR CARRYING OUT THE INVENTION

### <Explanation of Terms>

In the present description, the term "meat or meat-like processed food product" refers to both of a meat processed food product and a meat-like processed food product.

In the present description, the term "meat processed food product" refers to a food product that is prepared by processing meats of livestock such as cattle, pigs, horses, sheep, goats and rabbits, meats of poultries such as chickens, call ducks, ducks, turkeys, domestic ducks, quail, Guinea fowl and geese, meats of wild animals such as boars and deer obtained by hunting, or meats of marine mammals such as whales, dolphins and sea lions. The term "meat" refers to an edible meat.

In the present invention, the term "meat-like processed food product" refers to a food product that is prepared by processing protein ingredients derived from plants such as beans (e.g., soybeans, peas, sole beans, chickpeas, almonds, peanuts and lupin beans), wheat varieties (e.g., wheat, barley and rye), rice, seeds (sunflower, pumpkin, quinoa, chia and hemp), corn and mushroom, and refers to a food product that is produced to imitate the meat processed food product. The meat-like processed food product is referred also to as a meat substitute, a pseudo meat, a vegemeat or the like. The plant-derived protein ingredient may account for all or a part of the protein ingredient in the meat-like processed food product. In other words, the meat-like processed food product may further contain a meat as long as it contains the plant-derived protein ingredient. A food with a 0% by weight of meat content is specifically referred to as a meatless meat-like processed food product.

The present invention will be described in detail below with reference to preferable embodiments. The present invention is not limited by the following description, and each constituent element may be appropriately modified without departing from the scope of the gist of the present invention.

### [Method for producing meat or meat-like processed food product]

The method for producing meat or meat-like processed food product of the present invention (hereinafter simply referred also to as "the producing method of the present invention") is characterized in that the method includes: adding lipase to a vegetable oil and fat to obtain a mixture; and blending the mixture with an ingredient of the meat or meat-like processed food product.

As mentioned above, the vegetable oil and fat may be blended in the meat and meat-like processed food product for reasons relevant to eating patterns, avoidance of animal materials and the like. The inventors of the present invention found that such the meat or meat-like processed food product has problems such as a low yield and a deteriorated quality, e.g., dried texture due to outflow of the vegetable oil and fat during heating such as baking. In contrast, as for the producing method of the present invention in which the mixture obtained by adding lipase to the vegetable oil and fat is blended with the ingredient of the meat or meat-like processed food product, the vegetable oil and fat can be retained well during the heating, and thereby, there can be achieved the meat or meat-like processed food product with a high yield and improved juiciness. Thus, the present invention significantly contributes to the improvement of yield and quality in the production of the meat or meat-like processed food product containing the vegetable oil and fat.

The vegetable oil and fat is an oil and fat that is obtained from plant seeds, fruit or the like, and referred also to as a vegetable oil or a vegetable fat. In the present invention, any vegetable oil and fat may be used as the vegetable oil and fat depending on specification of the meat or meat-like processed food product to be produced. Types of the vegetable oil and fat are not particularly limited. Examples of the vegetable oil and fat may include rapeseed oil, olive oil, corn oil, soybean oil, sesame oil, rice oil, grapeseed oil, linseed oil, perilla oil, sunflower oil, safflower oil, peanut oil, almond oil, palm oil, palm kernel oil, coconut oil, coconut oil, cottonseed oil, camellia oil and castor oil. The vegetable oil and fat may be used alone or in combination of two or more types thereof.

From the viewpoint of achieving the meat or meat-like processed food product with a good yield and improved juiciness, a content of monovalent unsaturated fatty acid is preferably 15% by weight or more, more preferably 20% by weight or more, 25% by weight or more, or 30% by weight or more, when the total content of fatty acids constituting the vegetable oil and fat is defined as 100% by weight. In particular, when the content of the monovalent unsaturated fatty acid is 30% by weight or more, the outflow of the oil and fat during heat treatment can be significantly reduced, thereby enabling to produce the meat or meat-like processed food products with significantly excellent yield and qualities. The content of monovalent unsaturated fatty acid is more preferably 35% by weight or more, 40% by weight or more, 45% by weight or more, or 50% by weight or more.

Although the upper limit of the content of monovalent unsaturated fatty acid is not particularly limited, it is preferably 85% by weight or less, more preferably 80% by weight or less, 75% by weight or less, or 70% by weight or less from the viewpoint of producing the meat or meat-like processed food products with significantly excellent yield and qualities.

From the viewpoint of producing the meat or meat-like processed food products with significantly excellent yield and qualities, a content of oleic acid is preferably 60% by weight or more, more preferably 70% by weight or more, further preferably 75% by weight or more, 80% by weight or more, 85% by weight or more, or 90% by weight or more, when the total content of monovalent unsaturated fatty acid is defined as 100% by weight.

Fatty acid compositions of various vegetable oils and fats can be found in the USDA Food Composition Databases published by the U.S. Department of Agriculture (USDA), for example.

Lipase is an enzyme capable of hydrolyzing ester bonds constituting lipids. Examples of lipase include triacylglycerol lipase, triacylglyceride lipase and the like.

Lipases derived from various origins are known, such as lipases derived from microorganisms, lipases derived from plants, and lipases derived from animals. In the present invention, the origin of lipase is not particularly limited as long as the effect of the present invention can be achieved, and the lipase of any origin can be used, or a recombinant enzyme may be used. Among them, lipases derived from microorganisms are preferably used. Examples of the microorganism-derived lipase may include lipases derived from Alcaligenes bacteria, Penicillium fungi, Candida fungi, and Aspergillus fungi.

In the present invention, lipases commercially available from various companies can be used, such as lipase QLM (derived from Alcaligenes bacteria, manufactured by Meito Sangyo Co., Ltd.), lipase R (derived from Penicillium roqueforti, manufactured by Amano Enzyme Inc.), lipase A (derived from Aspergillus niger, manufactured by Amano Enzyme Inc.), and lipase AY (derived from Candida fungi, manufactured by Amano Enzyme Inc).

In the producing method of the present invention, the amount of lipase to be added differs depending on the type of lipase and the like, but the amount of lipase to be added per gram of the vegetable oil and fat is generally 0.1 U (unit) or more, and preferably 0.2 U or more, 0.3 U or more, 0.5 U or more, or 1 U or more, based on its enzyme activity. In particular, when the amount of lipase to be added per gram of the vegetable oil and fat is 0.5 U or more based on its enzyme activity, the outflow of the oil and fat can be significantly reduced during heat treatment, thereby enabling to produce the meat or meat-like processed food products with significantly excellent yield and qualities. Although the upper limit of the addition amount is not particularly limited as long as the effect of the present invention can be achieved, it is generally 500 U or less, and preferably 400 U or less, 300 U or less, 200 U or less, or 100 U or less, per gram of the vegetable oil and fat.

The enzyme activity of lipase can be calculated by, for example, allowing the lipase to act on an emulsion of olive oil which is a substrate for a certain period of time and then quantifying an amount of a liberated fatty acid with use of alkali. In the present description, the amount of enzyme that liberates 1 µmol of fatty acids per minute at 37°C is defined as 1 U.

The above amount of lipase may be added at a time to the vegetable oil and fat, or may be added in divided portions to the vegetable oil and fat. The lipase may be added while stirring the vegetable oil and fat, from the viewpoint of mixing the vegetable oil and fat with lipase well.

The condition preferred for adding the lipase to vegetable oil and fat differs depending on the type of vegetable oil and fat and the type of lipase, but the temperature is generally 0°C or more, preferably 2°C or more, 3°C or more, 4°C or more, or 5°C or more. The upper limit of the temperature is generally 60°C or less, preferably 50°C or less, 40°C or less, 30°C or less, or 20°C or less. The pH is generally in a range of 3 to 11, preferably 4 to 9.

The producing method of the present invention includes adding lipase to the vegetable oil and fat to prepare the mixture in advance, and blending the mixture with the ingredient of the meat or meat-like processed food product. Thus, there can be achieved the meat or meat-like processed food product with a good yield and improved juiciness. In this regard, it has been confirmed that the desired effect cannot be achieved by blending the vegetable oil and fat with the ingredient of the meat or meat-like processed food product, and then adding lipase to the resultant mixture. From the viewpoint of achieving the meat or meat-like processed food products with a good yield and improved juiciness, the mixture obtained by adding lipase to the vegetable oil and fat is preferably blended with the ingredient of the meat or meat-like processed food product after a certain time interval subsequent to the adding of lipase to the vegetable oil and fat. After adding lipase to the vegetable oil and fat, the resultant mixture may be blended with the ingredient of the meat or meat-like processed food product after an interval of generally 1 minute or more, preferably 5 minutes or more, more preferably 10 minutes or more, 20 minutes or more, or 30 minutes or more. Thus, in an embodiment, the mixture is blended with the ingredient of the meat or meat-like processed food product after an interval of 5 minutes or more subsequent to the adding of lipase to the vegetable oil and fat.

Although the upper limit of the time interval between the addition of lipase and the blending the mixture with the ingredient is not particularly limited, it is generally 120 hours or less, preferably 72 hours or less, more preferably 24 hours or less, 12 hours or less, or 6 hours or less.

The mixture obtained by adding lipase to the vegetable oil and fat may be stirred, allowed to stand, or repeatedly stirred and allowed to stand during the time interval before it is blended with the ingredient of the meat or meat-like processed food product. It is preferable to keep the mixture within a range of the suitable temperature and pH as noted above until it is blended with the ingredient of the meat or meat-like processed food product.

In an embodiment, the producing method of the present invention includes the steps of:
(A) adding lipase to the vegetable oil and fat; and
(B) adding the mixture obtained in the step (A) to the ingredient of the meat or meat-like processed food product.

The conditions such as pH and temperature in the step (A) and the time interval between the steps (A) and (B) are as described above.

In the present invention, the term, ingredient of the meat or meat-like processed food product (hereinafter simply referred also to as "ingredient"), is used to encompass meats, plant-derived protein ingredients, and other food ingredients used for producing the meat or meat-like processed food products. In this sense, the vegetable oil and fat and lipase can be included in the other food ingredients. However, for the sake of convenience, the vegetable oil and fat and lipase used are not included in the other food ingredients (and thus, the ingredient of the meat or meat-like processed food products) when defining content ratios and the like at the time of preparation in the present invention.

The meat and the plant-derived protein ingredient may be used as it is in bulk, or may be used after shredded, crushed or the like, depending on specification of the meat or meat-like processed food product to be produced.

Examples of the other food ingredients may include: animal fats such as beef tallow and pork fat; other protein ingredients such as dried egg whites and gluten flour; starchy ingredients such as bread, wheat flour, rice, oatmeal, cornmeal, and bean-starch vermicelli; thickening agents such as methylcellulose, propylene glycol alginate, sodium polyacrylate; binding agents such as phosphate salts (monosodium phosphate, dipotassium phosphate, etc.) and polymerized phosphates (sodium polyphosphate, sodium metaphosphate, etc.); preservatives such as sodium nitrite and sorbic acid; antioxidants such as sodium L-ascorbate and catechins; pH adjusters such as fumaric acid; emulsifiers such as glycerol fatty acid esters, sucrose fatty acid esters, polyglycerol fatty acid esters, saponin, lecithin, and sodium caseinate; seasonings such as salt, soy sauce, umami seasonings (sodium L-glutamate, sodium inosinate, etc.); spices such as beef flavor, onion powder, garlic powder, pepper, sage; coloring agents such as caramel coloring, annatto coloring and cochineal coloring; and nutritional enhancers such as vitamins (L-ascorbic acid, ergocalciferol, beta-carotene, etc.), minerals (zinc salts, calcium chloride, ferric chloride, etc.) and amino acids (sodium L-aspartate, DLalanine, L-arginine, L-isoleucine, etc.). These ingredients may be used alone or in combination of two or more types thereof.

When defining the total of the ingredients as 100 parts by weight, the total content of the meat and the plant-derived protein ingredient is generally 20 parts by weight or more, preferably 25 parts by weight or more, or 30 parts by weight or more. Although the upper limit of the content may be appropriately determined depending on specification of the meat or meat-like processed food product to be produced, it is generally 90 parts by weight or less, preferably 85 or less by weight, or 80 parts by weight or less.

In the production of meat-like processed food products, when defining the total content of the meat and the plant-derived protein ingredient in the ingredients as 100 parts by weight, the content of the plant-derived protein ingredient is preferably 70 parts by weight or more, more preferably 80 parts by weight or more, 85 parts by weight or more, 90 parts by weight or more, 95 parts by weight or more, 98 parts by weight or more, or 99 parts by weight or more, and may be 100 parts by weight.

In the producing method of the present invention, when defining the total of the ingredients of the meat or meat-like processed food products as 100 parts by weight, the blending amount of the mixture obtained by adding lipase to the vegetable oil and fat is preferably 10 parts by weight or more, more preferably 15 parts by weight or more, or 20 parts by weight or more. As mentioned above, the meat or meat-like processed food product containing the vegetable oil and fat has the problem of decreased yield due to outflow of the vegetable oil and fat during heating such as baking. The decrease in yield tends to be more significant as the amount of the vegetable oil and fat is higher. In contrast, as for the producing method of the present invention in which the mixture obtained by adding lipase to the vegetable oil and fat is blended with the ingredient of the meat or meat-like processed food product, the decrease in yield thereof can be advantageously prevented during heating, even when the amount of the vegetable oil and fat is high. Therefore, in the producing method of the present invention, the amount of the vegetable oil and fat can be increased while preventing the decrease in yield during heating. For example, when defining the total of the ingredients of the meat or meat-like processed food product as 100 parts by weight, the blending amount of the mixture obtained by adding lipase to the vegetable oil and fat may be as high as 25 parts by weight or more, or 30 parts by weight or more. The upper limit of the blending amount is generally 100 parts by weight or less, preferably 80 parts by weight or less, 60 parts by weight or less, or 50 parts by weight or less.

In the present invention, transglutaminase may be further added to achieve the meat or meat-like processed food product with significantly excellent juiciness. When further adding transglutaminase, it may be added together with lipase to the vegetable oil and fat, or may be added separately from lipase and the vegetable oil and fat to the ingredient of the meat or meat-like processed food product.

Transglutaminase is a transferase enzyme that catalyzes the reaction in which an amino group of glutamine in the protein is condensed with a primary amine and a substituent on the amine is transferred to glutamine to produce ammonia. Transglutaminase functions as a crosslinking enzyme since an amino group of lysine in the protein is usually used as the primary amine. Therefore, the application of transglutaminase enables crosslinking of the proteins contained in the meat, the plant-derived protein ingredient and the like.

Calcium-independent transglutaminase obtained from microorganisms is preferably used as the transglutaminase. The calcium-independent transglutaminases derived from microorganisms may include transglutaminase produced by actinomycetes belonging to the genus Streptomyces as an example, and can be obtained according to a method described in Japanese Patent No. 2572716 or the like. Commercially available products such as 'Activa TG-K' and 'Activa TG-S' manufactured by Ajinomoto Co., Inc. can also be used.

When transglutaminase is added, the amount of transglutaminase to be added is preferably 0.0001 U (unit) or more, and more preferably 0.1 U or more, per gram of total content of the meat and the plant-derived protein ingredient.

The enzyme activity of transglutaminase can be calculated by reacting benzyloxycarbonyl-L-glutaminylglycine with hydroxylamine as substrates, forming an iron complex of hydroxamic acid in the presence of trichloroacetic acid, measuring an absorbance at 525 nm, and then determining an amount of the generated hydroxamic acid based on a calibration curve. In the present description, an amount of enzyme to produce 1 µmol of hydroxamic acid per minute at 37°C, pH 6.0 is defined as 1 U (see JP-A-No. S64-27471).

With excessive elasticity, the texture of the meat or meat-like processed food products may be impaired. Therefore, the addition amount of transglutaminase is preferably 100 U or less, and more preferably 10 U or less, per gram of the total content of the meat and the plant-derived protein ingredient.

When transglutaminase is added, it is preferably subjected to a temperature condition of generally 0°C to 50°C, preferably 5°C to 50°C, more preferably 30°C to 50°C for generally 1 minute to 120 hours, preferably 1 minute to 72 hours, more preferably 1 minute to 24 hours in the presence of the meat and the plant-derived protein ingredient in order to promote the crosslinking reaction aided by transglutaminase.

The producing method of the present invention may further include a well-known processing usually employed for producing the meat or meat-like processed food products. For example, after the mixture obtained by adding lipase to the vegetable oil and fat is blended with the ingredient of the meat or meat-like processed food product, the resultant mixture may be molded, or filled into a casing or the like. In addition, an ordinary processing may be employed such as pickling (salting, marinating in miso, marinating in soy sauce, and the like), heating (baking, drying, boiling in water, smoking, steaming, and the like), and fermentation.

As for the producing method of the present invention in which the mixture obtained by adding lipase to the vegetable oil and fat is blended with the ingredient, the outflow of the vegetable oil and fat can be reduced during heating, thereby achieving the meat or meat-like processed food products with a good yield and improved juiciness, as mentioned above. Thus, in a preferred embodiment, the producing method of the present invention includes, after blending the mixture obtained by adding lipase to the vegetable oil and fat with the ingredient, a step of heating the resultant mixture.

A cooling method after the heat processing is not particularly limited, and may be cooling by leaving in a room temperature, cooling by flowing water, cooling by storing in a refrigerator at 2°C to 10°C, or freezing quickly in a freezer at -20°C or less.

As for the producing method of the present invention in which the mixture obtained by adding lipase to the vegetable oil and fat is blended with the ingredient, the outflow of the vegetable oil and fat can be reduced during heating for eating, thereby achieving the meat or meat-like processed food products with a good yield and improved juiciness.

The producing method of the present invention enables production of a wide variety of meat or meat-like processed food products containing the vegetable oil and fat, and the types of meat or meat-like processed food products are not particularly limited. As mentioned above, the producing method of the present invention in which the mixture obtained by adding lipase to the vegetable oil and fat is blended with the ingredient, the outflow of the vegetable oil and fat can be reduced during heating, thereby achieving the meat or meat-like processed food products with a good yield and improved juiciness. Therefore, in view of further achieving the effect of the present invention, the producing method of the present invention is preferably used for producing a food that is subjected to heating in the production processes thereof or in the processes until the food is eaten, particularly preferably the food that is subjected to heating plural times, such as a hamburger and hamburger-like processed food product, a meatball and meatball-like processed food product, a patty and patty-like processed food product, a ham and ham-like processed food product, a sausage and sausage-like processed food product, a dumpling and dumpling-like processed food product, and a shumai dumpling and shumai dumpling-like processed food product. Therefore, in a preferred embodiment, the meat or meat-like processed food product is a hamburger or hamburger-like processed food product, a meatball or meatball-like processed food product, a patty or patty-like processed food product, a ham or ham-like processed food product, a sausage or sausage-like processed food product, a dumpling or dumpling-like processed food product, or a shumai dumpling or shumai dumpling-like processed food product.

As a preferable embodiment of the invention, a method of producing a patty is described below.

To the plant-derived protein ingredient, other food ingredients such as animal oils and fats, other protein ingredients, starchy ingredients, thickening agents, binding agents, preservatives, antioxidants, pH adjusters, emulsifiers, seasonings, flavorings, colorings and nutrient enhancers are added depending on specifications of the patty, and then the resultant is mixed with a mixer. Other food ingredients may be added all at once and mixed with the plant-derived protein ingredient. Instead, other food ingredients may be divided into several parts, such as a binder part containing the thickening agent and the binding agent, a seasoning part containing the seasoning and the flavoring, and the other protein part containing other protein ingredients, that are to be added individually and then mixed altogether. Then, the pre-prepared mixture obtained by adding lipase to the vegetable oil and fat is added and mixed with the mixer. When other food ingredients are divided into several parts and each part is added and mixed, the mixture obtained by adding lipase to the vegetable oil and fat may be added after the ingredients of all parts are mixed altogether, or added after the ingredients of some parts are mixed together. When the mixture obtained by adding lipase to the vegetable oil and fat is added after the ingredients of some parts are mixed together, the ingredients of the remaining part may be added and mixed after the addition of the mixture. The resultant mixture is then molded, subjected to the heat treatment such as steaming and baking, and then cooled.

The meat may be added in place of/in addition to the plant-derived protein ingredient.

### [Method for improving yield of meat or meat-like processed food product containing vegetable oil and fat]

The present invention also provides a method for improving the yield of the meat or meat-like processed food product containing the vegetable oil and fat.

The method of improving the yield of the meat or meat-like processed food product containing the vegetable oil and fat in the present invention (hereinafter simply referred to as "the method of improving the yield of the present invention") is characterized in that the method includes: adding lipase to a vegetable oil and fat to obtain a mixture; and blending the mixture with an ingredient of the meat or meat-like processed food product.

The vegetable oil and fat and lipase, the method of adding lipase to the vegetable oil and fat, conditions such as the time preferred for blending the resultant mixture with the ingredient, as well as the ingredient for the meat or the meat-like processed food product, the blending amount ratios thereof, and the meat or the meat-like processed food product are as described in [Method for producing meat or meat-like processed food product] noted above. For example, from the viewpoint of achieving a good yield, the mixture is preferably blended with the ingredient of the meat or meat-like processed food product after a time interval of 5 minutes or more subsequent to the adding of lipase to the vegetable oil and fat. From the viewpoint of achieving the significantly high yield, it is particularly preferable that the content of the monovalent unsaturated fatty acid be 30% by weight or more when the total content of the fatty acid constituting the vegetable oil and fat is defined as 100% by weight. From the viewpoint of further achieving the effect of the present invention in improving the yield, the meat or meat-like processed food product is preferably a food that is subjected to heating in the production processes thereof or in the processes until the food is eaten, particularly preferably the food that is subjected to heating plural times, such as a hamburger and hamburger-like processed food product, a meatball and meatball-like processed food product, and a patty and patty-like processed food product.

With the method of improving the yield of the present invention, there can be reduced the weight loss due to the outflow of vegetable oil and fat during heating, thereby improving the yield, in the production of the meat or meat-like processed food product containing the vegetable oil and fat. When the yield achieved by blending the vegetable oil and fat directly with the ingredient without addition of lipase is defined as Y0 (%), the yield achieved by the method of improving the yield of the present invention, Y (%), is preferably Y0 + 0.5 (%) or more, more preferably Y0 + 1.0 (%) or more, or Y0 + 1.5 (%) or more. With the method of improving the yield of the present invention, the yield can be improved in the order of percents as described above, even when producing the meat or meat-like processed food product having high content of vegetable oil and fat which tends to result in a significantly low yield during heating. Other characteristics including the blending amount ratio of the vegetable oil and fat to other ingredient are as described in [Method for producing meat or meat-like processed food product] noted above.

As mentioned above, the outflow of the vegetable oil and fat can be reduced during heating to avoid dried texture, thereby achieving the meat or meat-like processed food product with improved juiciness. Therefore, the method of improving the yield of the present invention can be interpreted as "a method for improving the juiciness of the meat or meat-like processed food product containing the vegetable oil and fat".

### [Meat or meat-like processed food product]

The present invention also provides the meat or meat-like processed food product.

The meat or meat-like processed food product of the present invention is characterized in that the product contains the mixture obtained by adding lipase to the vegetable oil and fat. Thus, the meat or meat-like processed food product of the present invention achieves a good yield and excellent qualities such as juiciness.

The vegetable oil and fat, lipase, the ingredient of the meat or meat-like processed food product, and the blending amount ratios of thereof are as described in [Method for producing meat or meat-like processed food product] noted above.

From the viewpoint of further achieving the effect of the present invention, the meat or meat-like processed food product is preferably a food that is subjected to heating in the production processes thereof or in the processes until the food is eaten, particularly preferably the food that is subjected to heating plural times, such as a hamburger and hamburger-like processed food product, a meatball and meatball-like processed food product, and a patty and patty-like processed food product.

### Examples

There will be specifically described the present invention with Examples. However, the present invention is not limited to the Examples described below.

### [Examples 1 to 7]

### (Study on types of vegetable oil and fat)

### (1) Preparation of mixture obtained by adding lipase to vegetable oil and fat

Rapeseed oil, olive oil, corn oil, soybean oil, sesame oil, rice oil and grapeseed oil were prepared as vegetable oils and fats. Each of the vegetable oils and fats was placed in a stainless steel beaker, and lipase was added thereto. The amount of lipase added was 0.6 U per gram of the vegetable oil and fat. The mixture was obtained by mixing at 4°C for 1 minute. The mixture was allowed to stand at 4°C for 1 hour, and then used in the following step (2).

### (2) Production of meat-like processed food product

(a) Caramel coloring was dissolved in water. Then, granular pea protein and powdered pea protein were added thereto and mixed with a Hobart mixer for 3 minutes (the amount of each ingredient is listed in plant-derived protein part "A" in Table 1). Separately, methylcellulose was dispersed in boiled water and mixed with ice water to be dissolved (the amount of each ingredient is listed in binder part "B" in Table 1). The plant-derived protein part and the binder part obtained above were mixed with each other with the Hobart mixer for 2 minutes. Then, a seasoning part "C" and other protein part "D" in Table 1 were added and then mixed together with the Hobart mixer for 5 minutes.
(b) The mixture obtained in the above (1) was added to the ingredients of the meat-like processed food product obtained in the above (a), and mixed together with the Hobart mixer for 2 minutes. As shown in Table 1, 25 parts by weight of the mixture obtained in the above (1) was blended with 75 parts by weight of the total of the ingredients "a" to "d" of the meat-like processed food product.
(c) The mixture obtained in the above (b) was molded to obtain approximately 50 g per piece. The weight M1 (g) of the resultant molded product was measured.
(d) the molded product obtained in the above (c) was packed in vacuum, and heated in a steamer at 85°C for 30 minutes. The molded product was taken out from the package and then the weight M2 (g) of the molded product after steamed was measured.
(e) The molded product after steamed was baked on an oiled hot plate at 180°C for 1 minute for each side thereof. The weight M3 (g) of the molded product after baked was measured.
(f) The molded product after baked was quick-frozen at -30°C, and packed in vacuum, thus producing the meat-like processed food product.
(g) The meat-like processed food product was heated in a microwave at 600 W for 2 minutes and taken out from the package. Then, the weight W4 (g) of the meat-like processed food product was measured.

### (3) Evaluation of yield

The yield was calculated using the measured weights M1, M2 and M3 as follows. The yield was calculated by taking an average for three meat-like processed food products produced for each Example.
- Yield of steamed product (%) = 100 x M2/M1
- Yield of baked product (%) = 100 x M3/M2
- Product yield (%) = 100 x M3/M1

### (4) Evaluation of quality

The meat-like processed food product obtained as described above was heated in the microwave at 600W for 2 minutes, then taken out from the package. Quality (texture and taste) thereof was evaluated by four panelists. Scores were given according to the following evaluation criteria, and an average value was obtained therefrom. In the following evaluation criteria, "control" refers to a product in which the vegetable oil and fat was blended without addition of lipase. The controls for Examples 1, 2, 3, 4, 5, 6 and 7 correspond to Comparative Examples 1, 2, 3, 4, 5, 6 and 7, respectively.

### <Evaluation criteria>

### - Texture (juiciness) -

Much better than control; 5 points
Better than control; 4 points
Comparable to control; 3 points
Worse than control; 2 points
Much worse than control; 1 point

### - Taste -

Much better than control; 5 points
Better than control; 4 points
Comparable to control; 3 points
Odd taste sensed compared to control; 2 points
Very odd taste sensed compared to control; 1 point

### [Comparative Examples 1 to 7]

The meat-like processed food products were produced in the same manner as in Examples 1 to 7, except that each vegetable oil and fat was used as it was (without addition of lipase), and were evaluated in terms of yield and quality.

The ingredients used in Examples 1 to 7 and Comparative Examples 1 to 7 are as follows (the same applies to Examples 8 to 10 and Comparative Example 8 described below).
- Each vegetable oil and fat was a product used for general foods.
- The lipase used was a commercially available triacylglyceride lipase derived from microorganisms.
- NUTRALYS T65M available from Roquette Frères was used for granular pea protein. NUTRALYS S85F available from Roquette Frères was used for powdered pea protein.
- Caramel coloring, salt, dried egg white, gluten flour, and sodium caseinate were products used for general foods.
- Beef flavor, onion powder, garlic powder and black pepper that are commercially available as food additives, were mixed altogether as the flavoring.
[Table 1]

**(Table 1)**

| Ingredients | | Amount of content (parts by weight) |
|---|---|---|
| A | Granular pea protein | 15.00 |
| | Powdered pea protein | 8.00 |
| | Water | 35.45 |
| | Caramel coloring | 0.20 |
| B | Methylcellulose | 0.18 |
| | Boiled water | 1.62 |
| | Cold water | 4.20 |
| C | Spice | 2.30 |
| | Salt | 0.75 |
| D | Dried egg white | 1.00 |
| | Gluten flour | 3.00 |
| | Sodium caseinate | 3.30 |
| Total | | 75.00 |
| Mixture of Lipase-Vegetable oil and fat | | 25.00 |

[Table 2]

**(Table 2)**

| | | | Comparative Example 1 | Example 1 | Comparative Example 2 | Example 2 | Comparative Examp le 3 | Example 3 | Comparative Example 4 | Example 4 | Comparative Exa mp le 5 | Example 5 | Comparative Example 6 | Example 6 | Comparative Examp le 7 | Example 7 |
|---|---|---|---|---|---|---|---|---|---|---|---|---|---|---|---|---|
| Meat-like processed food product | Vegetable oil and fat | | Rapeseed | | Olive | | Corn | | Soybean | | Sesame | | Rice | | Grapeseed | |
| | Lipase | | - | Add | - | Add | - | Add | | Add | - | Add | - | Add | - | Add |
| Evaluation results | Yield | Y1 [%]^{∗1} | 93.4 | 96.1 | 94.4 | 96.3 | 96.9 | 96.0 | 94.4 | 93.2 | 94.8 | 94.3 | 93.5 | 94.8 | 94.1 | 94.4 |
| | | Y2 [%]^{∗2} | 91.5 | 92.7 | 96.0 | 94.8 | 93.2 | 95.9 | 94.2 | 95.9 | 94.7 | 97.2 | 94.6 | 95.1 | 95.6 | 96.1 |
| | | Y3 [%]^{∗3} | 85.4 | 89.1 | 90.7 | 91.3 | 90.3 | 92.1 | 88.9 | 89.5 | 89.7 | 91.6 | 88.5 | 90.2 | 89.9 | 90.6 |
| | Quality | Texture | - | 4.5 | - | 4.0 | - | 3.5 | - | 3.5 | - | 3.5 | - | 4.0 | - | 4.0 |
| | | Taste | - | 3.0 | - | 2.0 | - | 3.0 | - | 3.0 | - | 3.0 | - | 4.0 | - | 4.0 |

| | | | | | | | | | | | | | | | | |
|---|---|---|---|---|---|---|---|---|---|---|---|---|---|---|---|---|
| ^{∗1} Yield after steaming [=100 x (Weight M2 after steaming)/(Weight M1 before steaming)] ^{∗2} Yield after baking [=100 x (Weight M3 after baking)/(Weight M2 after steaming)] ^{∗3} Product yield [=100 x (Weight M3 after baking)/(Weight M1 before steaming)] | | | | | | | | | | | | | | | | |

The meat-like processed food products of Examples 1 to 7 containing the mixture obtained by adding lipase to the vegetable oil and fat were confirmed to achieve a higher yield both after steaming and after baking, and thus resulting in the product yield improved in the order of percent, compared to the meat-like processed food products of Comparative Examples 1 to 7 obtained by blending the vegetable oil and fat as it was (without addition of lipase). In addition, the meat-like processed food products of Examples 1 to 7 were confirmed to achieve better texture with more excellent juiciness than the meat-like processed food products of Comparative Examples 1 to 7, and achieve taste which is comparable to or better than those of Comparative Examples 1 to 7.

In particular, Examples 1, 3, 5 and 6 were confirmed to achieve the product yield increased by more than 1.5%.

### [Examples 8 to 10]

### (Study 1 on addition amount of lipase)

### (1) Preparation of mixture obtained by adding lipase to vegetable oil and fat

Rapeseed oil was prepared as the vegetable oil and fat. Rapeseed oil was placed in a stainless steel beaker and lipase was added thereto. The amount of lipase added was 1.2 U (Example 8), 2.4 U (Example 9), or 7.2 U (Example 10) per gram of the vegetable oil and fat. The mixture was obtained by mixing at 4°C for 1 minute. The mixture was allowed to stand at 4°C for 1 hour, and then used in the following step (2).

### (2) Production and evaluation of meat-like processed food products

The meat-like processed food products were produced in the same manner as in Examples 1 to 7, except that the amounts of the ingredients were changed into values listed in Table 3, and evaluated in terms of yield and quality in the same manner as in Examples 1 to 7.

### [Comparative Example 8]

The meat-like processed food product was produced in the same manner as in Examples 8 to 10, except that rapeseed oil was used as it was (without addition of lipase), and was evaluated in terms of yield and quality.
[Table 3]

**(Table 3)**

| Ingredients | | Amount of content (parts by weight) |
|---|---|---|
| A | Granular pea protein | 15.00 |
| | Powdered pea protein | 5.00 |
| | Water | 35.45 |
| | Caramel coloring | 0.20 |
| B | Methylcellulose | 0.18 |
| | Boiled water | 1.62 |
| | Cold water | 4.20 |
| C | Spice | 2.30 |
| | Salt | 0.75 |
| D | Dried egg white | 1.00 |
| | Gluten flour | 3.00 |
| | Sodium caseinate | 3.30 |
| | Granular pea protein | 3.00 |
| Total | | 75.00 |
| Mixture of Lipase-Vegetable oil and fat | | 25.00 |

[Table 4]

**(Table 4)**

| | | | Comparative Example | Example | | |
|---|---|---|---|---|---|---|
| | | | 8 | 8 | 9 | 10 |
| Meat-like processed food product | Vegetable oil and fat | | Rapeseed | | | |
| | Lipase ^{∗1} | | - | Add | | |
| | | | - | 1.2 | 2.4 | 7.2 |
| Evaluation results | Yield | Y2 [%]^{∗2} | 88.4 | 90.2 | 90.1 | 91.0 |
| | Quality | Texture | - | 4.0 | 4.0 | 5.0 |
| | | Taste | - | 4.0 | 2.5 | 2.5 |

| | | | | | | |
|---|---|---|---|---|---|---|
| ^{∗1} Addition amount (U/1g of vegetable oil and fat) in lower column ^{∗2} Yeild after baking [=100 x (Weight M3 after baking)/(Weight M2 after steaming)] | | | | | | |

The meat-like processed food products of Examples 8, 9 and 10 containing the mixture obtained by adding lipase to the vegetable oil and fat (rapeseed oil) were confirmed to achieve the improved yield after baking by more than 1.5%, compared to the meat-like processed food product of Comparative example 8 in which the vegetable oil and fat was blended as it was (without addition of lipase). The comparison of Examples 8, 9 and 10 reveals that the desired effect can be achieved by adding 1.2 U of lipase to the vegetable oil and fat in advance, based on enzyme activity, per gram of the vegetable oil and fat.

In addition, the meat-like processed food products of Examples 8, 9 and 10 were confirmed to achieve better texture with more excellent juiciness than the meat-like processed food product of Comparative Example 8 as well as taste which is comparable to or better than that of Comparative Example 8.

### [Examples 11 to 16]

### (Study on temperature and time during mixing lipase with vegetable oil and fat)

### (1) Preparation of mixture obtained by adding lipase to vegetable oil and fat

Rapeseed oil was prepared as the vegetable oil and fat. Rapeseed oil was placed in a stainless steel beaker and lipase was added thereto. The amount of lipase added was 1.2 U per gram of vegetable oil and fat. In Examples 11 to 13, the mixture was obtained by mixing at 5°C for 1 minute and then leaving it to stand at 5°C for 5 minutes (Example 11), 30 minutes (Example 12), or 60 minutes (Example 13) for use in the following step (2). In Examples 14 to 16, the mixture was obtained by mixing at 25°C for 1 minute and then leaving it to stand at 25°C for 5 minutes (Example 14), 30 minutes (Example 15), or 60 minutes (Example 16) for use in the following step (2).

### (2) Production and evaluation of meat-like processed food products

The meat-like processed food products were produced in the same manner as in Examples 1 to 7, except that the amounts of the ingredients were changed into values listed in Table 3, and evaluated in terms of yield and quality in the same manner as in Examples 1 to 7.

### [Comparative Examples 9 and 10]

The meat-like processed food products were produced in the same manner as in Examples 11 to 13 and 14 to 16, except that rapeseed oil was used at 5°C (Comparative Example 9) or 25°C (Comparative Example 10) as it was (without addition of lipase), and evaluated in terms of yield and quality.

### [Reference Examples 1 and 2]

Except that rapeseed oil at 5°C (Reference Example 1) or 25°C (Reference Example 2) was added to the ingredients of the meat-like processed food product simultaneously with 1.2 U of lipase per gram of rapeseed oil without mixing lipase and rapeseed oil beforehand, the meat-like processed food products were produced in the same manner as in Examples 11 to 13 and 14 to 16, and evaluated in terms of yield and quality.
[Table 5]

**(Table 5)**

| | | | Comparative Example | Reference Example | Example | | | Comparative Example | Reference Example | Example | | |
|---|---|---|---|---|---|---|---|---|---|---|---|---|
| | | | 9 | 1 | 11 | 12 | 13 | 10 | 2 | 14 | 15 | 16 |
| Meat-like processed food product | Mixing temperature | | 5°C | | | | | 25°C | | | | |
| | Time (min) | | 0 | 0 | 5 | 30 | 60 | 0 | 0 | 5 | 30 | 60 |
| | U/g-vegetable oil and fat | | - | 1.2 | 1.2 | 1.2 | 1.2 | - | 1.2 | 1.2 | 1.2 | 1.2 |
| Evaluation results | Yield | Y2[%]^{∗}1 | 88.4 | 88.7 | 91.0 | 90.2 | 89.4 | 89.1 | 89.5 | 89.9 | 90.4 | 89.9 |
| | Quality | Texture | - | 3.3 | 3.5 | 3.8 | 4.2 | - | 3.6 | 3.5 | 3.9 | 3.5 |
| | | Taste | - | 3.0 | 3.2 | 3.4 | 3.5 | - | 3.3 | 3.2 | 3.4 | 3.4 |

| | | | | | | | | | | | | |
|---|---|---|---|---|---|---|---|---|---|---|---|---|
| ^{∗1} Yield after baking [= 100 x (Weight M3 after baking)/(Weight M2 after steaming)] | | | | | | | | | | | | |

All of the meat-like processed food products of Examples 11 to 16 containing the mixture obtained by adding lipase to the vegetable oil and fat (rapeseed oil) were confirmed to improve the yield after baking, compared to the meat-like processed food product of Comparative Examples 9 and 10 in which the vegetable oil and fat was blended as it was (without addition of lipase) and the meat-like processed food products of Reference Examples 1 and 2 in which lipase and the vegetable oil and fat was not mixed with each other beforehand but were added simultaneously to the ingredients of the meat-like processed food product. In addition, from the comparison of Examples 11 to 16, it is confirmed that sufficient effects can be achieved by the temperature of 5°C for mixing the vegetable oil and fat with lipase and the time of 5 minutes for mixing the vegetable oil and fat with lipase.

In addition, it is confirmed that the meat-like processed food products of Examples 11 to 16 can provide better texture with superior juiciness compared to the meat-like processed food products of Comparative Examples 9 and 10, as well as better taste.

### [Examples 17 to 22]

### (Study 2 on addition amount of lipase)

### (1) Preparation of mixture obtained by adding lipase to vegetable oil and fat

Rapeseed oil was prepared as the vegetable oil and fat. Rapeseed oil was placed in a stainless steel beaker and lipase was added thereto. The amount of lipase added was 0.1 U (Example 17), 0.2 U (Example 18), 0.4 U (Example 19), 0.6 U (Example 20), 1.2 U (Example 21), or 3.6 U (Example 22) per gram of the vegetable oil and fat. The mixture was obtained by mixing at 5°C for 1 minute. Then, the mixture was allowed to stand at 5°C for 60 minutes, and used in the following step (2).

### (2) Production and evaluation of meat-like processed food products

The meat-like processed food products were produced in the same manner as in Examples 1 to 7, except that the amounts of the ingredients were changed into values listed in Table 3, and evaluated in terms of yield and quality in the same manner as in Examples 1 to 7.

### [Comparative Example 11]

Except that rapeseed oil was allowed to stand at 5°C for 60 minutes and then used as it was (without addition of lipase), the meat-like processed food products were produced in the same manner as in Examples 17 to 22 and evaluated in terms of yield and quality.
[Table 6]

**(Table 6)**

| | | | Comparative Example | Example | | | | | |
|---|---|---|---|---|---|---|---|---|---|
| | | | 11 | 17 | 18 | 19 | 20 | 21 | 22 |
| Meat-like processed food product | Mixing temperature | | 5°C | | | | | | |
| | Time (min) | | 60 | 60 | 60 | 60 | 60 | 60 | 60 |
| | U/g-veqetable oil and fat | | - | 0.1 | 0.2 | 0.4 | 0.6 | 1.2 | 3.6 |
| Evaluation results | Yield | Y2[%]^{∗1} | 88.1 | 87.7 | 87.0 | 87.0 | 89.0 | 89.2 | 90.9 |
| | Quality | Texture | - | 3.1 | 3.5 | 3.6 | 3.9 | 4.1 | 4.3 |
| | | Taste | - | 3.1 | 3.3 | 3.4 | 3.6 | 3.5 | 3.8 |

| | | | | | | | | | |
|---|---|---|---|---|---|---|---|---|---|
| ^{∗1} Yield after baking [= 100 x (Weight M3 after baking)/(Weight M2 after steaming)] | | | | | | | | | |

It is confirmed that all of the meat-like processed food products of Examples 17 to 22 containing the mixture obtained by adding lipase to the vegetable oil and fat (rapeseed oil) can provide better texture with superior juiciness compared to the meat-like processed food product of Comparative Example 11 obtained by adding the vegetable oil and fat as it was (without addition of lipase). In order to produce the meat-like processed food products with improved juiciness, it is understood that there can be achieved the effect when the amount of lipase added to the vegetable oil and fat in advance is 0.1 U per gram of the vegetable oil and fat, based on enzyme activity. In particular, it is confirmed that when the amount of lipase is 0.5 U or more, the meat-like processed food product can provide excellent juiciness and achieve significantly improved yield after baking.

### [Example 23]

### (Comparison with emulsifier-added system)

### (1) Preparation of mixture obtained by adding lipase to vegetable oil and fat

Rapeseed oil was prepared as the vegetable oil and fat. Rapeseed oil was placed in the stainless steel beaker and lipase was added thereto. The amount of lipase added was 1.2 U per gram of the vegetable oil and fat. The mixture was obtained by mixing at 5°C for 1 minute. Then, the mixture was allowed to stand at 5°C for 60 minutes, and used in the following step (2).

### (2) Production and evaluation of meat-like processed food products

The meat-like processed food products were produced in the same manner as in Examples 1 to 7, except that the amounts of the ingredients were changed into values listed in Table 3, and evaluated in terms of yield and quality in the same manner as in Examples 1 to 7.

### [Comparative Examples 12 to 14]

In Comparative Example 12, rapeseed oil was allowed to stand at 5°C for 60 minutes and then used as it was (without addition of lipase or emulsifier). In Comparative Examples 13 and 14, 28 mg of the emulsifier was added per gram of the vegetable oil and fat (rapeseed oil). Specifically, lecithin (Sun lecithin by Taiyo Kagaku Co., Ltd.) was used in Comparative Example 13. Glycerol fatty ester (Sunsoft by Taiyo Kagaku Co., Ltd.) was used in Comparative Example 14. It was mixed at 5°C for 1 minute to obtain a mixture. Then, the mixture was allowed to stand at 5°C for 60 minutes before use. Otherwise, the meat-like processed food products were produced in the same manner as in Example 23, and were evaluated in terms of yield and quality.
[Table 7]

**(Table 7)**

| | | | Comparative Example | | | Example |
|---|---|---|---|---|---|---|
| | | | 12 | 13 | 14 | 23 |
| Meat-like processed food product | Mixing temperature | | 5°C | | | |
| | Time (min) | | 60 | 60 | 60 | 60 |
| | Additive | | No additive | Sun Lecithin (Lecithin) | Sunsoft (Glycerol fatty acid ester) | Lipase |
| | U/g-vegetable oil and fat | | - | - | - | 1.2 |
| Evaluation results | Improvement rate of yield | ΔY2[%]^{∗1} | - | 0.7 | 0.3 | 1.0 |
| | Quality | Texture | - | 3.1 | 3.1 | 3.6 |
| | | Taste | - | 2.3 | 2.3 | 3.3 |

| | | | | | | |
|---|---|---|---|---|---|---|
| ^{∗1} Improvement rate of the yield after baking, Y2, compared to no additive system [= (Y2 of each Example)-(Y2 of Comparative Example 12)] | | | | | | |

It is confirmed that the meat-like processed food product of Example 23 containing the mixture obtained by adding lipase to the vegetable oil and fat (rapeseed oil) can achieve an improved yield after baking as well as better texture with superior juiciness and better taste compared to the meat-like processed food product of Comparative Example 12 obtained by blending the vegetable oil and fat as it was (without addition of lipase), and the meat-like processed food products of Comparative Examples 13 and 14 in which the emulsifier was used instead of lipase.

## Claims

1. A method for producing a meat or meat-like processed food product, the method comprising:
adding lipase to a vegetable oil and fat to obtain a mixture; and
blending the mixture with an ingredient of the meat or meat-like processed food product.

2. The method according to claim 1, wherein the mixture is blended with the ingredient of the meat or meat-like processed food product after an interval of 5 minutes or more subsequent to the adding of lipase to the vegetable oil and fat.

3. The method according to claim 1 or 2, wherein 10 parts by weight or more of the mixture obtained by adding lipase to the vegetable oil and fat is blended, when a total content of the ingredient of the meat or meat-like processed food product is defined as 100 parts by weight.

4. The method according to any one of claims 1 to 3, wherein the vegetable oil and fat is one or more type(s) selected from the group consisting of rapeseed oil, olive oil, corn oil, soybean oil, sesame oil, rice oil, grapeseed oil, palm oil and coconut oil.

5. The method according to any one of claims 1 to 4, wherein a content of a monovalent unsaturated fatty acid is 30% by weight or more when a total content of a fatty acid constituting the vegetable oil and fat is defined as 100% by weight.

6. The method according to any one of claims 1 to 5, wherein the meat or meat-like processed food product is a hamburger or hamburger-like processed food product, a meatball or meatball-like processed food product, a patty or patty-like processed food product, a ham or ham-like processed food product, a sausage or sausage-like processed food product, a dumpling or dumpling-like processed food product, or a shumai dumpling or shumai dumpling-like processed food product.

7. A method for improving a yield of a meat or meat-like processed food product containing a vegetable oil and fat, the method comprising:
adding lipase to the vegetable oil and fat to obtain a mixture; and
blending the mixture with an ingredient of the meat or meat-like processed food product.

8. The method according to claim 7, wherein the mixture is blended with the ingredient of the meat or meat-like processed food product after an interval of 5 minutes or more subsequent to the adding of lipase to the vegetable oil and fat.

9. The method according to claim 7 or 8, wherein the vegetable oil and fat is one or more type(s) selected from the group consisting of rapeseed oil, olive oil, corn oil, soybean oil, sesame oil, rice oil, grapeseed oil, palm oil and coconut oil.

10. The method according to any one of claims 7 to 9, wherein a content of a monovalent unsaturated fatty acid is 30% by weight or more when a total content of a fatty acid constituting the vegetable oil and fat is defined as 100% by weight.

11. The method according to any one of claims 7 to 10, wherein the meat or meat-like processed food product is a hamburger or hamburger-like processed food product, a meatball or meatball-like processed food product, a patty or patty-like processed food product, a ham or ham-like processed food product, a sausage or sausage-like processed food product, a dumpling or dumpling-like processed food product, or a shumai dumpling or shumai dumpling-like processed food product.

12. A meat or meat-like processed food product containing a mixture obtained by adding lipase to a vegetable oil and fat.
